# EUROPÄISCHE PATENTSCHRIFT

(11) **EP 3 249 476 B1**
(45) Veröffentlichungstag und Bekanntmachung des Hinweises auf die Patenterteilung: **15.06.2022**
(21) Anmeldenummer: 16171318.5
(22) Anmeldetag: 25.05.2016
(51) Int. Cl.: G05B 9/03

(54) **SENSOR**
SENSOR
CAPTEUR

(43) Veröffentlichungstag der Anmeldung: 29.11.2017
(73) Patentinhaber: Leuze electronic GmbH + Co KG, 73277 Owen/Teck (DE)
(72) Erfinder: Wolf, Tilo, 73240 Wendlingen (DE); Feller, Bernhard, 86316 Friedberg (DE)
(74) Vertreter: Ruckh, Rainer Gerhard

(56) Entgegenhaltungen:
- EP-A1- 3 015 755
- EP-A2- 1 480 060
- EP-A2- 2 637 067
- WO-A1-2014/204300
- DE-A1- 10 342 390
- DE-A1-102006 046 286
- US-A- 5 920 715

## Beschreibung

Die Erfindung betrifft eine Kontrollvorrichtung gemäß dem Oberbegriff des Anspruchs 1.

Derartige Kontrollvorrichtungen umfassen generell Sensoren, die insbesondere zur Steuerung von Maschinen und Anlagen eingesetzt werden können. Insbesondere können die Sensoren zur Positionierung von Fahrzeugen wie Regalbediengeräte, Elektrohängebahnen oder Querverschiebewagen eingesetzt werden. Der Sensor generiert dann Positionssignale, beispielsweise dadurch dass mit der Steuereinheit des Sensors, der auf dem jeweiligen Fahrzeug angeordnet ist, stationär angeordnete Positionsmarken erfasst werden.

Um Gefahrensituationen zu vermeiden, ist eine fehlersichere Steuerung des Fahrzeugs, insbesondere der Elektrohängebahn erforderlich. Zur Erfüllung des erforderlichen Sicherheitsniveaus werden bei bekannten Systemen zwei Sensoren als redundante Sensorstruktur eingesetzt, um die Positionssignale zu generieren. Die Positionssignale beider Sensoren werden dann einer Steuerung, insbesondere einem Frequenzumrichter, zugeführt. Mit der Steuerung erfolgt dann in Abhängigkeit der Positionssignale der Sensoren die Steuerung des Fahrzeugs.

In der Steuerung erfolgt eine fehlersichere Auswertung der Positionssignale der Sensoren, das heißt die Steuerung bildet eine Sicherheitssteuerung. Damit werden Steuersignale für den Antrieb generiert. Da durch die beiden Sensoren die Positionssignale für die Steuerung redundant generiert werden, ist das erforderliche Sicherheitsniveau für das Gesamtsystem erfüllt.

Nachteilig hierbei ist jedoch, dass das Vorsehen zweier Sensoren zur Ausbildung der redundanten Sensorstruktur einen unerwünscht hohen konstruktiven Aufwand des Gesamtsystems bedingt.

Die EP 1 480 060 A2 betrifft einen optischen Sensor zur Erfassung von Objekten in einem Überwachungsbereich mit wenigstens einem Sendelichtstrahlen emittierenden Sender, wenigstens einem Empfangslichtstrahlen empfangenden Empfänger und mit einer Auswerteeinheit, in welcher in Abhängigkeit der Empfangssignale am Ausgang des Empfängers ein Schaltsignal generiert wird, welches über wenigstens einen Sicherheitsschaltausgang zur Steuerung eines Arbeitsgerätes ausgegeben wird. In der Auswerteeinheit wird wenigstens ein Meldesignal generiert, an einen einkanaligen Meldeausgang ausgelesen, in die Auswerteeinheit rückgelesen und dort mit vorgegebenen Sollwerten verglichen. Bei einer Abweichung der Istwerte von den Sollwerten wird in der Auswerteeinheit ein Deaktivierungssignal für den Sicherheitsschaltausgang und/oder den Meldeausgang generiert.

Die EP 2 637 067 A2 betrifft eine Sensoranordnung zum Detektieren eines sicheren Anlagenzustandes einer automatisiert betriebenen Anlage, welche einen Eingangskreis besitzt, der zum Aufnehmen eines ersten Eingangssignals und zum Aufnehmen von zumindest einem weiteren Eingangssignal ausgebildet ist. Das erste Eingangssignal hängt von dem zu detektierenden sicheren Anlagenzustand ab. Das weitere Eingangssignal hängt von einem weiteren Zustand ab. Die Sensoranordnung besitzt ferner einen ersten und zumindest einen zweiten Ausgang zum Ausgeben eines ersten und eines zweiten Ausgangssignals, sowie eine Auswerteeinheit, die dazu ausgebildet ist, das erste Eingangssignal fehlersicher auszuwerten und in Abhängigkeit davon das erste und das zweite Ausgangssignal an dem ersten und zweiten Ausgang zu erzeugen. Das erste und das zweite Ausgangssignal bilden ein redundantes Signalpaar, welches gemeinsam den sicheren Anlagenzustand signalisiert. Die Auswerteeinheit ist ferner dazu ausgebildet, das weitere Eingangssignal auszuwerten und in Abhängigkeit davon ein drittes Ausgangssignal an dem ersten Ausgang und ein viertes Ausgangssignal an dem zweiten Ausgang zu erzeugen, wobei das dritte und das vierte Ausgangssignal ein nicht-redundantes Signalpaar bilden, das sich von dem redundanten Signalpaar unterscheidet.

Die DE 103 42 390 A1 betrifft ein Verfahren und eine Vorrichtung zur sicheren Verarbeitung von Positionsmesswerten. Die sichere Verarbeitung von Positionsmesswerten wird dadurch gewährleistet, dass der Positionsmesswert einer Messstelle einerseits einem Empfänger eines ersten Empfängerbausteins zugeführt wird und andererseits einem Empfänger eines zweiten Empfängerbausteins zugeführt wird. Jeder Empfängerbaustein weist zwei Empfänger auf, wobei einer dieser Empfänger Positionsmesswerte einer Messstelle empfängt und der andere Empfänger Positionsmesswerte einer weiteren Messstelle empfängt.

Die DE 10 2006 046 286 A1 betrifft ein Verfahren zur Bewegungsüberwachung einer Maschine, welche einen Geber aufweist, wobei ein Gebersignal vom Geber zu einer Steuerung und/oder zu einer Antriebseinrichtung übertragen wird, wobei als Steuerung bzw. Antriebseinrichtung eine fehlersichere Steuerung bzw. Antriebseinrichtung verwendet wird.

Die WO 2014/204300 A1 betrifft ein System zur Lagerung von Containern. Ein Führungssystem ist mit Identifikationszeichen versehen. Diese können von Lesegeräten gelesen werden, die jeweils auf einer einen Container tragenden Transporteinheit vorgesehen sind.

Die EP 3 015 755 A1 betrifft einen Sicherheitsbetätigungssensor mit einem Sensorelement, mit einer Auswerteeinheit und mit mindestens einem Betätigerelement. Der Sicherheitsbetätigungssensor weist zwei Sicherheitsausgänge auf, die mit einer Sicherheitssteuerung verbunden sind, wobei die Auswerteeinheit dazu ausgebildet ist, abhängig von der Detektion des Betätigerelements durch das Sensorelement, auf jedem der zwei Sicherheitsausgänge jeweils ein Betätigungssignal auszugeben. Die Auswerteeinheit ist dazu ausgebildet, unterschiedliche Betätigerelemente zu detektieren, die unterschiedlichen Betätigerelemente zu unterscheiden und auf jedem der zwei Sicherheitsausgänge abhängig von dem detektierten Betätigerelement jeweils zusätzlich Frequenzsignale mit Frequenzen auszugeben.

Die DE 195 04 404 C1 Z (US 5 920 715 A) betrifft eine Systemarchitektur mit einem ersten Prozessor, mit dem ersten Prozessor zugeordneten ersten Speichermitteln, mit ersten dem ersten Prozessor zugeordneten Peripheriemitteln, die Ein/Ausgänge und mit dem ersten Prozessor verbundene Inhibiteingänge aufweisen, wobei letztere dazu dienen, die ersten Peripheriemittel dagegen zu sperren, Informationen über die Eingänge entgegenzunehmen, wenn an die Inhibiteingänge ein Inhibitsignal übermittelt wurde. Auf dem ersten Prozessor ist ein lauffähiger erster Programmkomplex implementiert, der hinsichtlich seiner Fehlerfreiheit verifiziert ist, der zumindest überwiegend mit den ersten Speichermitteln des ersten Prozessors zusammenwirkt und derart arbeitet, dass er, wenn er auf dem ersten Prozessor läuft, beim Erreichen festgelegter Bedingungen an die ihm zugeordneten Peripheriemittel ein Inhibitsignal abgibt und den ersten Prozessor freigibt, und dass er sobald er den ersten Prozessor zurückerhält das Inhibitsignal zurücknimmt oder löscht. Weiterhin sind dem ersten Prozessor zugeordnete zweite Speichermittel vorgesehen, sowie zweite dem ersten Prozessor zugeordnete Peripheriemittel, die mit dem ersten Prozessor verbundene Ein/Ausgänge aufweisen. Schließlich ist auf dem ersten Prozessor ein zweiter Programmkomplex vorgesehen, an den hinsichtlich seiner Fehlerfreiheit geringere Anforderungen als an den ersten Programmkomplex gestellt werden, der zumindest überwiegend mit den zweiten Speichermitteln des ersten Prozessors zusammenwirkt, bei fehlerfreiem Lauf auf die Ein/Ausgänge der dem ersten Programmkomplex zugeordneten Peripheriemittel wenn überhaupt dann lediglich lesend zugreift und beim Erreichen festgelegter Bedingungen den ersten Prozessor freigibt.

Der Erfindung liegt die Aufgabe zugrunde, eine Kontrollvorrichtung der eingangs genannten Art bereitzustellen, welche bei geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Kontrollvorrichtung mit einem Sensor. Der Sensor weist eine Sensoreinheit zur Erfassung von Objekten und Auswertemittel, in welchen eine fehlersichere Auswertung von Sensorsignalen der Sensoreinheit zur Generierung eines Ausgangssignals erfolgt auf. Die Kontrollvorrichtung bildet eine Positioniereinrichtung aus, die zur Positionierung eines Regalbediengeräts, einer Elektrohängebahn oder eines Querverschiebewagens ausgebildet ist. Die Auswertemittel weisen eine Auswerteeinheit zur Auswertung der Sensorsignale und eine Überwachungseinheit zur Überwachung der Auswerteeinheit auf. Die Überwachungseinheit ist von einer zweiten Auswerteeinheit gebildet, wobei die Auswerteeinheit und die Überwachungseinheit von identisch ausgebildeten, sich gegenseitig zyklisch überwachenden und durch eine bidirektionale Leitung verbundenen Rechnereinheiten gebildet sind. Diese überwachen sich im Hinblick darauf, ob diese identische Ausgangssignale generieren und generieren bei Auftreten eines Fehlers eine entsprechende Fehlermeldung. Zwei diversitär ausgebildete Datenschnittstellen, die aus unterschiedlichen Bauteilen aufgebaut sind oder unterschiedliche Schnittstellenparameter und Steckerbelegungen aufweisen, sind vorgesehen. Dabei erhält eine erste Datenschnittstelle das Ausgangssignal von der Auswerteeinheit und gibt dieses eine erste Datenleitung an eine externe Einheit aus. Die zweite Datenschnittstelle erhält das Ausgangssignal von der Überwachungseinheit und gibt dieses über eine zweite Datenleitung an die externe Einheit aus. Bei Auftreten eines Fehlers wird das Ausgangssignal mit der

Fehlermeldung an die externe Einheit ausgegeben. Die externe Einheit erfüllt sicherheitsrelevante Funktionen und gewährleistet eine fehlersichere Verarbeitung der Ausgangssignale. Mit der Sensoreinheit werden Positionen und/oder Geschwindigkeiten von Objekten erfasst. Die Ausgangssignale sind von Positionssignalen und/oder Geschwindigkeitssignalen gebildet.

Der Begriff Sensor umfasst generell eine Sensoranordnung mit einem oder mehreren Sensoren.

Ein wesentlicher Aspekt der Erfindung besteht darin, dass der Sensor insoweit einen fehlersicheren Aufbau aufweist, dass mit den Auswertemitteln eine fehlersichere Auswertung der Sensorsignale der Sensoreinheit erfolgt. Dadurch wird mit dem erfindungsgemäßen Sensor eine fehlersichere Objekterfassung ermöglicht. Da hinsichtlich der Objekterfassung mit nur einem Sensor dasselbe oder ein entsprechendes Sicherheitsniveau erzielt wird wie mit zwei nichtfehlersicheren, bekannten Sensoren, kann somit durch Einsparung eines Sensors im Gesamtsystem ein erheblicher Einsparungs- beziehungsweise Rationalisierungseffekt erzielt werden. Insbesondere wird eine Einsparung hinsichtlich der Gerätekosten, Montagekosten sowie der Kosten bei Inbetriebnahme und Wartung erzielt.

Ein weiterer wesentlicher Aspekt der Erfindung besteht darin, dass die in der Auswerteeinheit generierten Ausgangssignale über die Datenschnittstelle zweikanalig in die externe Einheit ausgelesen werden. Damit kann durch in der externen Einheit vorgesehene sicherheitstechnische Funktionen eine Verarbeitung der Ausgangssignale derart erfolgen, dass das Gesamtsystem, bestehend aus Sensor und externer Einheit, das jeweils geforderte Sicherheitsniveau erfüllen kann. Beispielsweise kann der externen Einheit in Abhängigkeit der Sensorsignale des Sensors eine Maschine oder Anlage gesteuert werden, wobei durch die Fehlersicherheit des Gesamtsystems bestehend aus Sensor und externer Einheit die Maschine oder Anlage in sicherheitstechnischen Applikationen, insbesondere auch im Bereich des Personenschutzes eingesetzt werden kann. Erfindungsgemäß werden mit der Sensoreinheit Positionen und/oder Geschwindigkeiten von Objekten erfasst. Die Ausgangssignale sind von Positionssignalen und/oder Geschwindigkeitssignalen gebildet.

Dementsprechend wird der Sensor der erfindungsgemäßen Kontrollvorrichtung zu sicherheitsrelevanten Positionieraufgaben eingesetzt. Dabei wird der Sensor zu einer Positioniereinrichtung eines Fahrzeugs eingesetzt. Der Sensor ist auf dem Fahrzeug angeordnet, wobei der Sensor stationäre Gegenstände vermisst, an welchen das Fahrzeug zu positionieren ist. Erfindungsgemäß sind die Fahrzeuge Regalbediengeräte, Elektrohängebahnen oder Querverschiebewagen. Gemäß einer vorteilhaften Ausgestaltung ist der Sensor der erfindungsgemäßen Kontrollvorrichtung als optischer Sensor ausgebildet. In diesem Fall emittiert der optische Sensor vorzugsweise gerichtete Lichtstrahlen, die orts- und zeitaufgelöst registriert werden, wodurch mit dem optischen Sensor eine genaue Positions- und/oder Geschwindigkeitsbestimmung durchgeführt werden kann.

Gemäß der Erfindung sind die Datenschnittstellen diversitär aufgebaut. Dadurch können systematische Fehler derart, dass ein Fehler in gleicher Weise über beide Datenschnittstellen übertragen wird, grundsätzlich vermieden werden. Ein derartiger diversitärer Aufbau der Datenschnittstellen lässt sich dadurch realisieren, dass die Datenschnittstellen aus unterschiedlichen Bauteilen bestehen. Weiterhin können die Datenschnittstellen auch unterschiedliche Schnittstellenparameter, Steckerbelegungen und dergleichen aufweisen.

Vorteilhaft werden dabei über die Datenschnittstellen encoderkompatible Ausgangssignale oder SSI-Schnittstellen ausgegeben.

Damit bilden die Datenschnittstellen Standardschnittstellen, die in zahlreichen Applikationen, insbesondere im Bereich von Fahrzeugsteuerungen, eingesetzt werden können.

Erfindungsgemäß wird bei Erkennung eines Fehlers in den Auswertemitteln über die Datenschnittstellen mit dem Ausgangssignal eine Fehlermeldung ausgegeben.

Damit ist im Fehlerfall die Datenübertragung vom Sensor der erfindungsgemäßen Kontrollvorrichtung zur externen Einheit nicht völlig unterbrochen, so dass die externe Einheit die Ausgangssignale nach wie vor auswerten kann. Durch die mit den Ausgangssignalen übertragenen Fehlermeldungen weist die externe Einheit, dass die Ausgangssignale mit Fehlern behaftet sind und kann ihre Verarbeitung der Ausgangssignale entsprechend anpassen.

Die Auswertemittel weisen eine Auswerteeinheit zur Auswertung der Sensorsignale und eine Überwachungseinheit zur Überwachung der Auswerteeinheit auf.

Da die Datenschnittstellen nicht fehlersicher sind, ist es zur Erzielung des geforderten Sicherheitsniveaus für den Einsatz des Gesamtsystems, bestehend aus Sensor und externer Einheit erforderlich, dass die externe Einheit sicherheitsrelevante Funktionen erfüllt und eine fehlersichere Verarbeitung der Ausgangssignale gewährleistet.

Zweckmäßig ist die externe Einheit eine Steuerung.

Dabei ist insbesondere die Steuerung von einem einen Antrieb steuernden Frequenzumrichter gebildet.

Generell werden mit der Steuerung fehlersichere Steuersignale für den Antrieb generiert.

Diese Ausbildung der externen Einheit als Steuerung eignet sich insbesondere für Anwendungen, in welchen Fahrzeuge in Abhängigkeit der Sensorsignale des Sensors gesteuert, insbesondere an stationären Gegenständen positioniert werden sollen. Die externe Einheit bildet dann die Fahrzeugsteuerung, wobei der Sensor vorteilhaft mitfahrend auf dem Fahrzeug angeordnet ist.

Gemäß einer vorteilhaften Weiterbildung der Erfindung ist eine Sensoranordnung mit mehreren jeweils eine Sensoreinheit aufweisenden Sensoren vorgesehen, wobei alle Sensoren an Auswertemittel angeschlossen sind, in welchen eine fehlersichere Auswertung der Sensorsignale aller Sensoren zur Generierung eines Ausgangssignals erfolgt. Zwei nicht fehlersichere Datenschnittstellen sind vorgesehen über welche das Ausgangssignal an eine externe Einheit ausgebbar ist. Damit können vorteilhaft mit mehreren Sensoren, die für sich allein keine vollständige Objektdetektion gewährleisten, besonders genaue und zuverlässige Objektdetektionen dadurch durchgeführt werden, dass sich die Sensorsignale ergänzen, das heißt die Sensoren wirken synergetisch zusammen.

Die Erfindung wird im Folgenden anhand der Zeichnungen erläutert. Es zeigen:
- Figur 1:: Ausführungsbeispiel des erfindungsgemäßen Sensors mit einer zugeordneten Steuerung für den Antrieb eines Fahrzeugs.
- Figur 2:: Schematische Darstellung eines Applikationsbeispiels des Sensors gemäß Figur 1.

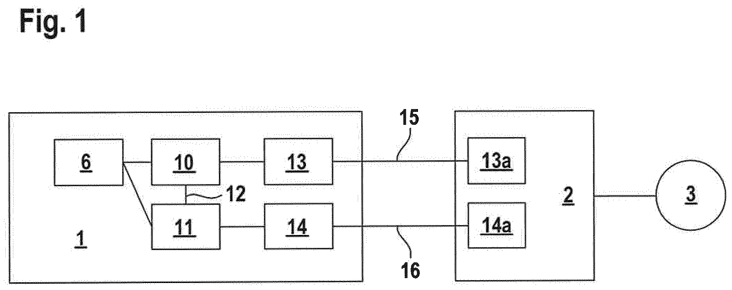

Figur 1 zeigt ein Gesamtsystem in Form einer Kontrollvorrichtung, die im vorliegenden Fall für eine sichere Fahrzeugsteuerung dient. Das Gesamtsystem umfasst einen Sensor 1 und eine diesem zugeordnete Steuerung als externe Einheit. Die Steuerung besteht im vorliegenden Fall aus einem Frequenzumrichter 2, der einen Antrieb 3 eines Fahrzeugs steuert.

Der Sensor 1 ist im vorliegenden Fall als optischer Sensor ausgebildet und umfasst eine Sensoreinheit 6 zur Erfassung von Objekten.

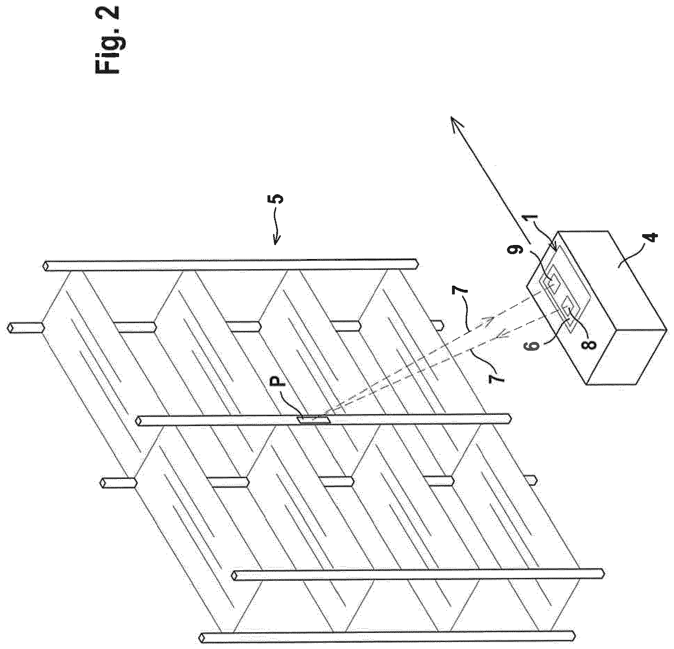

Figur 2 zeigt ein Applikationsbeispiel des optischen Sensors gemäß Figur 1. Der Sensor 1 ist in diesem Fall auf einem Fahrzeug in Form eines Regalbediengeräts 4 mitfahrend angeordnet. Anhand von Sensorsignalen, die vom optischen Sensor generiert werden, erfolgt eine Positionierung des Regalbediengeräts 4 an bestimmten Sollpositionen vor einem Regal 5, um dann Be- und Entladevorgänge vornehmen zu können.

Der optische Sensor weist als Sensoreinheit 6 einen Lichtstrahlen 7 emittierenden Sender 8 und einen Lichtstrahlen 7 empfangenden Empfänger 9 auf. Der Sender 8 kann ein oder mehrere Sendeelemente in Form von Leuchtdioden oder Laserdioden aufweisen.

Vorteilhaft werden die Lichtstrahlen des Senders über einen rotierenden Spiegel oder ein Polygonspiegelrad abgelenkt und so entlang einer Abtastlinie periodisch innerhalb eines Überwachungsbereichs geführt.

Mit der so ausgebildeten Sensoreinheit 6 des Sensors 1 können ortsaufgelöst Zielobjekte, wie Positionsmarken P, am Regal 5 erfasst werden. Der Übersichtlichkeit halber ist nur ein solches Zielobjekt in Figur 2 dargestellt.

Generell kann anstelle einzelner Positionsmarken auch ein Positionsmaßsystem bestehend aus einem Band, auf welchem in vorgegebenen Abständen Codes vorgesehen sind, verwendet werden, wobei in den Codes deren Positionen auf dem Band codiert sind.

Der Sensor 1 umfasst Auswertemittel, mittels derer in Abhängigkeit der in der Sensoreinheit 6 generierten Sensorsignale Ausgangssignale generiert werden. Die Auswertemittel weisen eine zweikanalige Struktur auf, wobei im vorliegenden Fall die Auswertemittel von einer Auswerteeinheit 10 und einer Überwachungseinheit 11 gebildet ist. Mit dem Auswertemittel kann damit eine fehlersichere Auswertung der Sensorsignale durchgeführt werden, wodurch als Ergebnis der Auswertung sichere Ausgangssignale erhalten werden.

Im vorliegenden Fall liefern die Sensorsignale Informationen über Positionen und Geschwindigkeiten, insbesondere bezüglich eines mit der Sensoreinheit 6 erfassten Zielobjekts, so dass als sichere Ausgangssignale Positionssignale oder auch Geschwindigkeitssignale generiert werden.

Generell kann die Auswerteeinheit 10 nur zur Auswertung der Sensorsignale dienen und die Überwachungseinheit 11 allein zur Überwachung der Funktion der Auswerteeinheit 10 dienen. Im vorliegenden Fall werden jedoch die Sensorsignale der Sensoreinheit 6 sowohl der Auswerteeinheit 10 als auch der Überwachungseinheit 11 zugeführt, so dass die Auswertung der Sensorsignale nicht nur in der Auswerteeinheit 10, sondern gleichermaßen auch in der Überwachungseinheit 11 erfolgt. In diesem Fall bestehen die Auswerteeinheit 10 und die Überwachungseinheit 11 aus Rechnereinheiten, die gegebenenfalls identisch ausgebildet sein können und sich gegenseitig zyklisch überwachen, insbesondere im Hinblick darauf, ob sie identische Ausgangssignale generieren. Für die gegenseitige Überwachung sind die Rechnereinheiten über eine bidirektionale Leitung 12 verbunden. Sollte bei dieser Überprüfung ein Fehler aufgedeckt werden, wird eine entsprechende Fehlermeldung generiert.

Die in den Auswertemitteln generierten Ausgangssignale werden über zwei nichtfehlersichere Datenschnittstellen 13, 14 an die externe Einheit, das heißt in diesem Fall den Frequenzumrichter 2, ausgegeben. Anstelle des Frequenzumrichters 2 kann auch eine Sicherheitssteuerung vorgesehen sein.

Die erste Datenschnittstelle 13 erhält das Ausgangssignal von der Auswerteeinheit 10 und gibt es über eine erste Datenleitung 15 an den Frequenzumrichter 2 aus, wobei zum Empfang des Ausgangssignals im Frequenzumrichter 2 eine korrespondierende Datenschnittstelle 13a vorgesehen ist. Die zweite Datenschnittstelle 14 erhält das Ausgangssignal von der Überwachungseinheit 11 und gibt es über eine zweite Datenleitung 16 an den Frequenzumrichter 2 aus, wobei zum Empfang des Ausgangssignals im Frequenzumrichter 2 eine korrespondierende Datenschnittstelle 14a vorgesehen ist.

Um systematische gleiche Fehler bei dieser Übertragung der Ausgangssignale auszuschließen, weisen die Datenschnittstellen 13, 14 einen diversitären Aufbau auf. Hierzu können die Datenschnittstellen 13, 14 aus unterschiedlichen Bauteilen aufgebaut sein. Alternativ können die Datenschnittstellen 13, 14 unterschiedliche Schnittstellenparameter und Steckerbelegungen aufweisen.

Da die Datenschnittstellen 13, 14 nicht fehlersicher sind, können diese von kostengünstigen Standard-Schnittstellen gebildet sein. Vorteilhaft bilden diese Datenschnittstellen 13, 14 encoderkompatible Schnittstellen. Weiterhin sind die Datenschnittstellen 13, 14 geeignet Positionssignale zu übertragen. Beispiele hierfür sind sogenannte SSI-Schnittstellen (synchron-serielle Schnittstellen).

Das Gesamtsystem, bestehend aus Sensor 1 und externer Einheit, kann für sicherheitstechnische Applikationen eingesetzt werden, obwohl die Datenschnittstellen 13, 14 des Sensors 1 nicht fehlersicher sind. Dies beruht darauf, dass in der externen Einheit alle notwendigen sicherheitstechnischen Funktionen umgesetzt werden. Insbesondere erfolgt in der externen Einheit eine fehlersichere Verarbeitung der Ausgangssignale des Sensors 1, um so ein fehlersicheres Steuersignal für den Antrieb 3 zu generieren. Die externe Einheit ist zur Erfüllung eines bestimmten Sicherheitsniveaus nach einer entsprechenden Sicherheitskategorie zertifiziert.

Wird in den Auswertemitteln bei der Überwachung der Auswerteeinheit 10 beziehungsweise der Überwachungseinheit 11 ein Fehler aufgedeckt und eine Fehlermeldung generiert, wird die Übertragung der Ausgangssignale zur externen Einheit nicht unterbrochen. Vielmehr werden die Ausgangssignale zusammen mit der Fehlermeldung an die externe Einheit übertragen, so dass die externe Einheit die Fehlermeldung bei der Verarbeitung der Ausgangssignale berücksichtigen kann.

### Bezugszeichenliste

- (1): Sensor
- (2): Frequenzumrichter
- (3): Antrieb
- (4): Regalbediengerät
- (5): Regal
- (6): Sensoreinheit
- (7): Lichtstrahlen
- (8): Sender
- (9): Empfänger
- (10): Auswerteeinheit
- (11): Überwachungseinheit
- (12): bidirektionale Leitung
- (13, 14): Datenschnittstelle
- (13a ,14a): Datenschnittstelle
- (15): erste Datenleitung
- (16): zweite Datenleitung
- (P): Positionsmarke

## Patentansprüche

1. Kontrollvorrichtung mit einem Sensor (1), welcher eine Sensoreinheit (6) zur Erfassung von Objekten und Auswertemittel, in welchen eine fehlersichere Auswertung von Sensorsignalen der Sensoreinheit (6) zur Generierung eines Ausgangssignals erfolgt aufweist, wobei die Kontrollvorrichtung eine Positioniereinrichtung ausbildet, die zur Positionierung eines Regalbediengeräts, einer Elektrohängebahn oder eines Querverschiebewagens ausgebildet ist, **dadurch gekennzeichnet, dass** die Auswertemittel eine Auswerteeinheit (10) zur Auswertung der Sensorsignale und eine Überwachungseinheit (11) zur Überwachung der Auswerteeinheit (10) aufweisen, wobei die Überwachungseinheit (11) von einer zweiten Auswerteeinheit gebildet ist, wobei die Auswerteinheit (10) und die Überwachungseinheit (11) von identisch ausgebildeten, sich gegenseitig zyklisch überwachenden und durch eine bidirektionale Leitung (12) verbundenen Rechnereinheiten gebildet sind und sich im Hinblick darauf, ob diese identische Ausgangssignale generieren, überwachen und bei Auftreten eines Fehlers eine entsprechende Fehlermeldung generieren, dass zwei diversitär ausgebildete Datenschnittstellen (13, 14), die aus unterschiedlichen Bauteilen aufgebaut sind oder unterschiedliche Schnittstellenparameter und Steckerbelegungen aufweisen, vorgesehen sind, wobei eine erste Datenschnittstelle (13) das Ausgangssignal von der Auswerteeinheit (10) erhält und über eine erste Datenleitung (15) an eine externe Einheit ausgibt, und wobei die zweite Datenschnittstelle (14) das Ausgangssignal von der Überwachungseinheit (11) erhält und über eine zweite Datenleitung (16) an die externe Einheit ausgibt, und wobei bei Auftreten eines Fehlers das Ausgangssignal mit der Fehlermeldung an die externe Einheit ausgegeben wird, wodurch die externe Einheit sicherheitsrelevante Funktionen erfüllt und eine fehlersichere Verarbeitung der Ausgangssignale gewährleistet, und dass mit der Sensoreinheit (6) Positionen und/oder Geschwindigkeiten von Objekten erfasst werden, und dass die Ausgangssignale von Positionssignalen und/oder Geschwindigkeitssignalen gebildet sind.

2. Kontrollvorrichtung nach Anspruch 1, **dadurch gekennzeichnet, dass** der Sensor (1) ein optischer Sensor ist.

3. Kontrollvorrichtung nach Anspruch 2, **dadurch gekennzeichnet, dass** der optische Sensor ein entfernungsmessender Sensor ist, wobei die Entfernungsbestimmung nach einem Lichtlaufzeitverfahren oder durch Messung gegen ein Positionsmaßsystem erfolgt.

4. Kontrollvorrichtung nach einem der Ansprüche 1 bis 3, **dadurch gekennzeichnet, dass** die externe Einheit eine Steuerung ist.

5. Kontrollvorrichtung nach Anspruch 4, **dadurch gekennzeichnet, dass** die Steuerung von einem einen Antrieb (3) steuernden Frequenzumrichter (2) gebildet ist.

6. Kontrollvorrichtung nach Anspruch 5, **dadurch gekennzeichnet, dass** mit der Steuerung fehlersichere Steuersignale für den Antrieb (3) generiert werden.

## Claims

1. A control device with a sensor (1), which has a sensor unit (6) for detecting objects and evaluation means in which an error-free evaluation of sensor signals of the sensor unit (6) takes place in order to generate an output signal, the control device forming a positioning device which is designed for positioning a storage and retrieval unit, an electric overhead conveyor or a transverse transfer carriage, **characterised in that** the evaluation means have an evaluation unit (10) for evaluating the sensor signals and a monitoring unit (11) for monitoring the evaluation unit (10), the monitoring unit (11) being formed by a second evaluation unit (10), **in that** the evaluation means have an evaluation unit (10) for evaluating the sensor signals and a monitoring unit (11) for monitoring the evaluation unit (10), the monitoring unit (11) being formed by a second evaluation unit, the evaluation unit (10) and the monitoring unit (11) being formed by identically designed computer units which monitor one another cyclically and are connected by a bidirectional line (12) and monitor one another with regard to whether they generate identical output signals, and generate a corresponding error message when an error occurs, **in that** two diversely designed data interfaces (13, 14) which are constructed from different components or have different interface parameters and pin assignments are provided, a first data interface (13) receiving the output signal from the evaluation unit (10) and outputting it to an external unit via a first data line (15), and wherein the second data interface (14) receives the output signal from the monitoring unit (11) and outputs it to the external unit via a second data line (16), and wherein, if an error occurs, the output signal is output to the external unit with the error message, whereby the external unit fulfils safety-relevant functions and ensures fail-safe processing of the output signals, and **in that** positions and/or speeds of objects are detected with the sensor unit (6), and **in that** the output signals are formed by position signals and/or speed signals.

2. A control device according to claim 1, **characterised in that** the sensor (1) is an optical sensor.

3. A control device according to claim 2, **characterised in that** the optical sensor is a distance-measuring sensor, the distance being determined according to a time-of-flight method or by measurement against a position measurement system.

4. A control device according to any one of claims 1 to 3, **characterised in that** the external unit is a controller.

5. A control device according to claim 4, **characterised in that** the control is formed by a frequency converter (2) controlling a drive (3).

6. A control device according to claim 5, **characterised in that** fail-safe control signals for the drive (3) are generated with the control.

## Revendications

1. Dispositif de commande avec un capteur (1), qui présente une unité de capteur (6) pour la détection d'objets et des moyens d'évaluation dans lesquels a lieu une évaluation sans erreur de signaux de capteur de l'unité de capteur (6) pour générer un signal de sortie, le dispositif de commande formant un dispositif de positionnement qui est conçu pour positionner une unité de stockage et de déstockage, un convoyeur aérien électrique ou un chariot de transfert transversal, **caractérisé en ce que** les moyens d'évaluation présentent une unité d'évaluation (10) pour l'évaluation des signaux de capteur et une unité de surveillance (11) pour assurer la surveillance de l'unité d'évaluation (10), l'unité de surveillance (11) étant formée par une seconde unité d'évaluation (10), **en ce que** les moyens d'évaluation présentent une unité d'évaluation (10) pour assurer l'évaluation des signaux de capteur et une unité de surveillance (11) pour assuer la surveillance de l'unité d'évaluation (10), l'unité de surveillance (11) étant formée par une seconde unité d'évaluation, l'unité d'évaluation (10) et l'unité de surveillance (11) étant formées par des unités de calcul de conception identique qui se surveillent mutuellement de manière cyclique et qui sont reliées par une ligne bidirectionnelle (12) et qui se surveillent mutuellement pour savoir si elles génèrent des signaux de sortie identiques, et génèrent un message d'erreur correspondant lorsqu'une erreur se produit, **en ce que** deux interfaces de données (13, 14) de conception différente, qui sont construites à partir de composants différents ou présentent des paramètres d'interface et des affectations de broches différents, sont prévues, une première interface de données (13) recevant le signal de sortie de l'unité d'évaluation (10) et le sortant vers une unité externe via une première ligne de données (15), et dans laquelle la seconde interface de données (14) reçoit le signal de sortie de l'unité de surveillance (11) et le délivre à l'unité externe par l'intermédiaire d'une seconde ligne de données (16), et dans laquelle, en cas d'erreur, le signal de sortie est délivré à l'unité externe avec le message d'erreur, l'unité externe remplissant des fonctions importantes pour la sécurité et assurant un traitement sûr des signaux de sortie, et **en ce que** des positions et/ou des vitesses d'objets sont détectées avec l'unité de capteur (6), et **en ce que** les signaux de sortie sont formés par des signaux de position et/ou des signaux de vitesse.

2. Dispositif de commande selon la revendication 1, **caractérisé en ce que** le capteur (1) est un capteur optique.

3. Dispositif de commande selon la revendication 2, **caractérisé en ce que** le capteur optique est un capteur de mesure de distance, la distance étant déterminée selon une méthode de temps de vol ou par mesure par rapport à un système de mesure de position.

4. Dispositif de commande selon l'une quelconque des revendications 1 à 3, **caractérisé en ce que** l'unité externe est un contrôleur.

5. Dispositif de commande selon la revendication 4, **caractérisé en ce que** la commande est formée par un convertisseur de fréquence (2) commandant un entraînement (3).

6. Dispositif de commande selon la revendication 5, **caractérisé en ce que** des signaux de commande à sécurité intégrée pour l'entraînement e (3) sont générés avec la commande.
